# EUROPÄISCHE PATENTSCHRIFT

(11) **EP 1 181 970 B1**
(45) Veröffentlichungstag und Bekanntmachung des Hinweises auf die Patenterteilung: **04.02.2004**
(21) Anmeldenummer: 00117618.9
(22) Anmeldetag: 16.08.2000
(51) Int. Cl.: B01D 53/94, B01J 23/58

(54) **Abgasreinigungskatalysator für motornahen Einsatz und Verfahren zu seiner Herstellung**
Close-coupled catalyst for purifying exhaust gas and process for making the same
Catalyseur pour purifier des gaz d'échappement placé près du moteur et son procédé de fabrication

(43) Veröffentlichungstag der Anmeldung: 27.02.2002
(73) Patentinhaber: Umicore AG & Co. KG, 63457 Hanau-Wolfgang (DE)
(72) Erfinder: Lindner, Dieter Dr., D-63457 Hanau (DE); Mussmann, Lothar Dr., D-63067 Offenbach (DE); Votsmeier, Martin Dr., D-63477 Maintal (DE); Lox, Egbert Dr., D-63403 Hanau (DE); Kreuzer, Thomas Dr., D-61184 Karben (DE)
(74) Vertreter: Stellbrink, Axel

(56) Entgegenhaltungen:
- EP-A- 0 749 774
- EP-A- 0 786 284
- EP-A- 0 848 983
- DE-A- 19 522 913
- DE-A- 19 804 587

## Beschreibung

Die Erfindung betrifft einen Abgasreinigungskatalysator für motomahen Einsatz für die Reinigung der Abgase von Otto-Motoren, der aus Palladium auf Aluminiumoxid und aus Bariumoxid besteht sowie ein Verfahren zu seiner Herstellung. Der Katalysator weist eine hohe Aktivität und Langzeitstabilität gegenüber hohen Temperaturbelastungen auf.

Abgasreinigungskatalysatoren werden seit etwa drei Jahrzehnten eingesetzt, um die von den Verbrennungsmotoren emittierten Schadstoffe Kohlenmonoxid (CO), Kohlenwasserstoffe (HC) und Stickoxide (NOx) in die umweltverträglichen Verbindungen Wasser, Stickstoff und Kohlendioxid zu überführen. Alle drei Schadstoffe lassen sich gleichzeitig mit so genannten Dreiweg-Katalysatoren aus dem Abgas von Otto-Motoren entfernen, wenn der Motor mit stöchiometrisch zusammengesetzten Luft/Kraftstoff-Gemischen betrieben wird.

Die eigentliche Katalysatormasse besteht zumeist aus einem hochoberflächigen, oxidischen Trägermaterial, auf dem die katalytisch aktiven Komponenten in feinster Verteilung abgeschieden sind. Als katalytisch aktive Komponenten für die Reinigung von stöchiometrisch zusammengesetzten Abgasen eignen sich insbesondere die Edelmetalle der Platingruppe, Platin, Palladium, Rhodium, Iridium, Ruthenium und Osmium. Als Trägermaterial eignen sich zum Beispiel Aluminiumoxid, Siliciumdioxid, Titanoxid, Zirkonoxid und deren Mischoxide und Zeolithe. Bevorzugt werden so genannte aktive Aluminiumoxide mit einer spezifischen Oberfläche (BET-Oberfläche gemessen nach DIN 66132) von mehr als 10 m²/g eingesetzt. Zur Verbesserung der dynamischen Konvertierung enthalten Dreiweg-Katalysatoren darüber hinaus so genannte Sauerstoff speichernde Komponenten. Hierzu gehören Ceroxid, Praseodymoxid und Cer/Zirkon-Mischoxide.

Die Form, in welcher die Komponenten des Katalysators bei seiner Herstellung eingesetzt werden, hat einen wesentlichen Einfluß auf die spätere Funktion des Katalysators. Im Rahmen dieser Erfindung werden folgende Fälle unterschieden:
a) "feinteilige Feststoffe"
   Hierunter werden pulverförmige Materialien mit Korngrößen zwischen 1 und etwa 50 um verstanden. In der angelsächsischen Literatur werden hierfür die Ausdrücke "bulk material" oder "particulate material" verwendet.
b) lösliche "Vorläuferverbindungen"
   Die Vorläuferverbindungen werden auf in der Regel hochoberflächigen Feststoffen abgeschieden und durch thermische Behandlung in oxidativer oder reduktiver Atmosphäre in die eigentlichen katalytisch aktiven Komponenten überführt.

Die Katalysatormasse ist in der Regel auf monolithischen, inerten Wabenkörpern aus Keramik oder Metall in Form einer Beschichtung abgeschieden. Die Wabenkörper besitzen in einem engen Raster über ihren Querschnitt angeordnete, parallel zur Längsachse der Wabenkörper liegende Strömungskanäle für das zu reinigende Abgas. Die Zelldichte (Anzahl der Strömungskanäle pro Querschnittsfläche der Wabenkörper) liegt gewöhnlich zwischen 10 und 200 cm⁻². Am häufigsten werden heute Wabenkörper mit Zelldichten von 62 cm⁻² eingesetzt. Die katalytisch aktive Beschichtung wird auf den Wandflächen der die Strömungskanäle begrenzenden Trennwände in Konzentrationen von 50 bis 300 Gramm pro Liter (g/l) Volumen der Wabenkörper abgeschieden.

Die bekannten Dreiweg-Katalysatoren sind in der Lage, die Abgase von Otto-Motoren beim normalen Betrieb in befriedigender Weise zu reinigen. Die noch verbleibenden Restemissionen bestehen im wesentlichen aus unverbrannten Kohlenwasserstoffen, die hauptsächlich während der ersten ein bis zwei Minuten nach dem Kaltstart emittiert werden. Zur Verminderung der Kaltstart-Emissionen wurden so genannte Startkatalysatoren entwickelt, die im Gegensatz zu den normalen Dreiweg-Katalysatoren nicht im Unterbodenbereich des Kraftfahrzeugs, sondern nahe am Motor angeordnet werden, um eine möglichst schnelle Aufheizung der Startkatalysatoren über ihre Anspringtemperatur von 150 bis 250 °C zu erreichen. Diese Anordnung belastet die Startkatalysatoren andererseits während des normalen Betriebs des Kraftfahrzeugs mit Abgastemperaturen von 1000 °C und darüber. Startkatalysatoren, in der angelsächsischen Literatur auch als "close-coupled catalysts" bezeichnet, sollten also neben einer niedrigen Anspringtemperatur für die Kohlenwasserstoffe auch eine sehr gute Temperaturstabilität aufweisen. Im Rahmen dieser Erfindung werden Katalysatoren, die motornah eingesetzt werden als Startkatalysatoren bezeichnet.

In der WO 97/23278 wird ein Startkatalysator beschrieben, der ein Platingruppenmetall auf einem Trägermaterial enthält und im wesentlichen kein Sauerstoff speicherndes Material aufweist. In einer speziellen Ausführungsform des Startkatalysators enthält er Palladium auf Aluminiumoxid sowie ein Erdalkalimetall zur Stabilisierung gegenüber thermischen Belastungen. Zur Abscheidung von Palladium auf dem Aluminiumoxid wird das Aluminiumoxid mit einer Lösung von Palladiumnitrat imprägniert. Das Palladium enthaltende Aluminiumoxid wird dann zusammen mit einer Lösung von Zirkonylacetat und deionisiertem Wasser gemahlen. Der Beschichtungssuspension kann auch festes Bariumoxid zugefügt werden.

Die EP 0 749 774 A2 beschreibt unter anderem die Herstellung eines Katalysators durch konventionelles Imprägnieren von γ-Aluminiumoxid mit einer Mischung aus einer Bariumnitratlösung und einer Palladiumnitratlösung. Das imprägnierte Material wird bei 700 °C für die Dauer von 3 Stunden calciniert. Über die dabei erzielten mittleren Durchmesser der Palladiumkristallite wird nichts berichtet.

Die DE 198 04 587 A1 beschreibt ein aufwendiges Verfahren zur Herstellung eines Palladium, Bariumcarbonat und Aluminiumoxid enthaltenden Katalysators. In einer Mikroemulsion werden Palladiumkristallite mit einer Teilchengröße von 3 nm hergestellt, die anschließend mit Aluminiumoxid in einem Ausmaß von 20 bis 90 % umhüllt werden.

Aufgabe der vorliegenden Erfindung ist es, einen Startkatalysator anzugeben, welcher aus Palladium, Aluminiumoxid und Bariumoxid besteht und gegenüber bekannten Startkatalysatoren eine verbesserte Temperaturstabilität aufweist.

Überraschender Weise hat sich gezeigt, daß diese Aufgabe gelöst wird, wenn Bariumoxid und Palladium gemeinsam auf dem Trägermaterial Aluminiumoxid vorliegen und die mittlere Partikelgröße der Palladiumkristallite zwischen 3 und 7 nm liegt. Diese Kristallitgröße des Palladiums in Kombination mit dem eng benachbarten Bariumoxid gewährleistet eine hohe Aktivität des Katalysators, die ihm auch nach Alterung noch bessere Leistungsdaten als den bekannten Startkatalysatoren verleiht.

Dem Fachmann ist zwar bekannt, daß die katalytische Aktivität eines Katalysators in gewissen Grenzen um so größer wird, je kleiner die katalytisch aktiven Metallkristallite sind, wie die vorliegenden Untersuchungen zeigen, sind jedoch Kristallitgrößen für Palladium zwischen 4 und 7 nm mit konventionellen Imprägnierverfahren nicht herstellbar, so daß Katalysatoren mit diesen mittleren Kristallitgrößen des Palladiums bisher nicht bekannt waren. Nur durch Anwendung des in der DE 197 14 723 A1 beschriebenen Injektionsverfahrens war es möglich, die geforderten Kristallitgrößen herzustellen. Um auch Bariumoxid in engem Kontakt mit Palladium auf dem Trägermaterial abzuscheiden, wurde das Verfahren gemäß DE 197 14 723 A1 in besonders vorteilhafter Weise abgewandelt.

Zur Herstellung der Beschichtungssuspension wird wie folgt vorgegangen: Aluminiumoxid und hydratisiertes Bariumhydroxid werden in Wasser suspendiert, wobei Bariumhydroxid in Lösung geht und den pH-Wert der Suspension in den basischen Bereich verschiebt. Danach wird eine wässrige Lösung einer sauren Vorstufe von Palladium, bevorzugt Palladiumnitrat, der Suspension unter ständigem Rühren mittels Kapillarinjektion zugeführt, das heißt Palladiumnitrat wird mit Hilfe von Kapillaren, deren Öffnungen unter der Oberfläche der Suspension enden, injiziert. Gleichzeitig wird die Suspension intensiv gerührt, um eine möglichst schnelle und homogene Verteilung des Palladiumnitrats in der Suspension zu gewährleisten. Nach Beendigung der Zugabe von Palladiumnitrat wird die Suspension noch eine Zeit lang gerührt, um die Fixierung von Palladium und Barium in innigem Kontakt zueinander auf der Oberfläche des Aluminiumoxids zu ermöglichen. Durch die Zugabe der sauren Palladiumnitrat-Lösung wird der pH-Wert der Suspension in den neutralen Bereich verschoben.

Die resultierende Suspension kann direkt zur Beschichtung von Wabenkörpern mit Hilfe bekannter Verfahren eingesetzt werden. Der Feststoffgehalt der Suspension wird bevorzugt auf einen Wert zwischen 25 und 60 Gew.-% eingestellt. Dieser Wert gestattet es, die für den Startkatalysator vorgesehenen Beschichtungskonzentrationen von 20 bis 200 g/l in nur einem Beschichtungsvorgang auf die Wabenkörper aufzubringen. Falls notwendig, kann die Viskosität der Suspension durch Zusetzen von Basen oder Laugen in geeigneter Weise auf das eingesetzte Beschichtungsverfahren abgestimmt werden.

Nach dem Beschichten werden die Wabenkörper bei erhöhter Temperatur getrocknet und anschließend an Luft bei Temperaturen zwischen 300 und 700 °C für die Dauer von 0,5 bis 5 Stunden calciniert. Durch die Calcinierung werden die Vorläuferverbindungen von Palladium und Barium zersetzt und oxidiert. Es ist bekannt, daß Bariumoxid sich an Luft mit dem in der Luft enthaltenen Kohlendioxid zu Bariumcarbonat umsetzt, so daß die Bariumoxidpartikel zumindest oberflächlich auch Bariumcarbonat enthalten. Im Rahmen dieser Erfindung wird trotz dieses Sachverhaltes der Einfachheit halber nur von Bariumoxid gesprochen.

Gemäß der DE 197 14 723 A1 wird zur chemischen Fixierung des Palladiums auf dem Aluminiumoxid eine verdünnte Ammoniak-Lösung in die Suspension in analoger Weise wie Palladiumnitrat injiziert. Die Verwendung von Bariumhydroxid zur chemischen Fixierung des Palladiums auf dem Aluminiumoxid in der vorliegenden Erfindung hat den Vorteil, daß auf Ammoniak als basisches Material verzichtet werden kann. Die basischen Eigenschaften des Bariumhydroxids bewirken, daß das für den Katalysator benötigte Barium in inniger Mischung mit Palladium auf dem Aluminiumoxid abgeschieden wird. Bei der abschließenden Calcinierung werden Palladium und Barium in ihre endgültige Form überführt. Das sich auf der Oberfläche des Aluminiumoxids bildende Bariumoxid unterstützt die Stabilisierung des Aluminiumoxids gegenüber thermischen Belastungen.

Als Trägermaterial für Bariumoxid und Palladium werden so genannte aktive Aluminiumoxide eingesetzt. Es handelt sich dabei um feinteilige Aluminiumoxide, welche die Kristallstrukturen der Übergangsphasen des Aluminiumoxids aufweisen. Hierzu gehören chi-, delta-, gamma-, kappa-, theta- und eta-Aluminiumoxid. Die aktiven Aluminiumoxide weisen spezifische Oberflächen von bis zu 400 m²/g auf. Mit steigender Temperatur wandeln sich die genannten Kristallstrukturen unter gleichzeitiger Verminderung der spezifischen Oberfläche ineinander um (siehe Ullmann's Encyclopedia of Industrial Chemistry; 5^{th} Edition 1985; Vol A1; Seiten 557-563). Oberhalb von 1150 °C ist nur das oberflächenarme alpha-Aluminiumoxid beständig. Dieser Prozeß kann durch Stabilisierung mit Erdalkalimetalloxiden, insbesondere Bariumoxid, Seltenerdoxiden, bevorzugt Lanthanoxid, oder Siliziumdioxid verlangsamt werden. Hierzu enthalten die stabilisierten, aktiven Aluminiumoxide gewöhnlich 1 bis 10 Gew.-% an Bariumoxid, Lanthanoxid oder Siliziumdioxid, bezogen auf das Gesamtgewicht des stabilisierten Materials.

Für die vorliegende Erfindung wird bevorzugt ein mit 2 bis 4 Gew.-% Lanthanoxid stabilisiertes gamma-Aluminiumoxid mit einer spezifischen Oberfläche zwischen 100 und 180 m²/g eingesetzt. Durch das bei der Abscheidung von Palladium eingesetzte Bariumhydroxid wird das Aluminiumoxid weiter stabilisiert.

Der erfindungsgemäße Startkatalysator enthält bevorzugt 1 bis 10 g/l Palladium, 45 bis 180 g/l Aluminiumoxid, stabilisiert mit Lanthanoxid, und 5 bis 20 g/l Bariumoxid.

Der Startkatalysator wird motornah angeordnet und in Kombination mit einem im Unterbodenbereich des Kraftfahrzeugs liegenden Hauptkatalysator eingesetzt. Er wirkt hierbei als reiner Oxidationskatalysator für die während der Kaltstartphase emittierten Kohlenwasserstoffe. Soll aus Kostengründen auf den Hauptkatalysator verzichtet werden, so muß der Startkatalysator mit einer zusätzlichen Dreiwegfunktion ausgestattet werden. Hierzu wird in einer besonderen Ausführungsform der Erfindung auf die erste Beschichtung des Startkatalysators eine zweite katalytisch aktive Beschichtung aufgebracht, welche Platin und Rhodium auf Aluminiumoxid sowie eine Sauerstoff speichernde Komponente und weiteres Aluminiumoxid enthält. Die zweite Schicht wird in einer Konzentration von 30 bis 100 g/l auf die Wabenkörper aufgebracht.

Die Beschichtungssuspension für diese zweite Schicht wird wie folgt angefertigt: Zunächst wird das als Trägermaterial für Platin und Rhodium dienende Aluminiumoxid mit diesen beiden Platingruppenmetallen durch Imprägnieren mit einer wässrigen Lösung von löslichen Vorläuferverbindungen dieser Metalle beschichtet, getrocknet und calciniert. Danach wird das katalysierte Trägermaterial zusammen mit einer Sauerstoff speichernden Komponente und zusätzlichem, aktiven Aluminiumoxid zur Herstellung einer Beschichtungssuspension in Wasser suspendiert. Mit dieser Beschichtungssuspension wird der schon mit der ersten katalytischen Beschichtung versehene Tragkörper erneut beschichtet. Abschließend wird der beschichtete Tragkörper getrocknet und calciniert.

Als Vorläuferverbindungen für Platin sind alle Verbindungen geeignet, die in dem gewählten Lösungsmittel löslich sind und sich durch Erhitzen zu Platin zersetzen lassen. Beispielhaft für solche Verbindungen sind Hexachloroplatinsäure, Ammoniumchloroplatinat, Platintetrachlorid, Platinnitrat, Platintetraamminnitrat und Platintetraammin hydroxid. Bevorzugt werden solche Platinvorläuferverbindungen eingesetzt, von denen bekannt ist, daß mit ihrer Hilfe Platinbeschichtungen mit hoher Dispersion der Platinkristallite erhalten werden. Zu diesen Verbindungen gehören anionische Komplexverbindungen wie Methylethanolaminplatin(IV)hexahydroxid ((MEA)₂Pt(OH)₆ = ((OH-C₂H₄-NH₂-CH₃)₂⁺Pt^{IV}(OH)₆) und Ethanolaminplatin(IV)hexahydroxide ((EA)₂Pt(OH)₆ = (OH-C₂H₄-NH₃)₂⁺Pt^{IV}(OH)₆).

Als Vorläuferverbindung für Rhodium sind zum Beispiel Rhodiumchlorid, Rhodiumacetat und Rhodiumnitrat geeignet

Das als Trägermaterial für Platin und Rhodium dienende Aluminiumoxid kann mit deren Vorläuferverbindungen sequentiell in beliebiger Reihenfolge oder gleichzeitig durch Verwendung einer gemeinsamen Lösung imprägniert werden. Bevorzugt wird jedoch das Aluminiumoxid unter Anwendung des schon beschriebenen Verfahrens der Kapillarinjektion zuerst mit Platin und danach mit Rhodium belegt. Zu diesem Zweck wird eine Lösung von Ethanolaminplatin(IV)hexahydroxid verwendet. Das als Trägermaterial bestimmte Aluminiumoxid wird zum Beispiel in Wasser suspendiert und anschließend die Platinlösung injiziert. Die Abscheidung von Platin auf Aluminiumoxid wird durch geeignete Anpassung des pH-Wertes der Suspension eingeleitet. Nach Abscheidung des Platins wird Rhodium auf dem Aluminiumoxid abgeschieden. Dies geschieht durch Zugabe einer Lösung einer sauren Vorläuferverbindung von Rhodium, zum Beispiel Rhodiumnitrat, zu der Suspension. Abschließend werden Platin und Rhodium auf dem Trägermaterial durch Anpassen des pH-Wertes der Suspension fixiert.

Die so erhaltene Suspension kann sofort zur endgültigen Beschichtungssuspension weiterverarbeitet werden. Hierzu wird der Suspension das Sauerstoff speichernde Material und gegebenenfalls zusätzliches Aluminiumoxid hinzugefügt. Danach kann mit dieser Suspension die zweite Schicht auf dem Tragkörper abgeschieden werden.

Als Sauerstoff speicherndes Material wird bevorzugt ein Cer/Zirkon-Mischoxid eingesetzt, welches mit Praseodymoxid stabilisiert ist. Falls kein fertiges, stabilisiertes Material zur Verfügung steht, kann das Cer/Zirkon-Mischoxid auch in situ stabilisiert werden. Zu diesem Zweck werden eine Lösung einer Praseodymoxid-Vorläuferverbindung, Cer/Zirkon-Mischoxid und gegebenenfalls weiteres Aluminiumoxid in die Suspension eingerührt, welche das schon mit Platin und Rhodium katalysierte Aluminiumoxid enthält. Diese Suspension wird dann verwendet, um die zweite Beschichtung auf den Tragkörper des Katalysators aufzubringen. Während der Calcinierung der Beschichtung wird die Vorläuferverbindung des Praseodymoxids zersetzt und in Praseodymoxid überführt. Hierbei scheidet sich das Praseodymoxid in hoher Dispersion auf allen feinteiligen Bestandteilen der zweiten Beschichtung ab und stabilisiert auf diese Weise das eingesetzte Cer/Zirkon-Mischoxid gegen thermische Belastungen.

Die Erfindung wird nun an Hand der folgenden Beispiele und Vergleichsbeispiele näher erläutert. Es wurden erfindungsgemäße Katalysatoren präpariert und bezüglich ihrer katalytischen Eigenschaften charakterisiert. Als Tragkörper für die Katalysatoren dienten in allen Fällen keramische Wabenkörper aus Cordierit mit einer Zelldichte von 62 cm⁻² (400 cpsi), einem Durchmesser von 2,54 cm und einer Länge von 7,62 cm.

### Vergleichsbeispiel 1:

Es wurde mit Lanthanoxid stabilisiertes γ-Aluminiumoxid (3 Gew.-% Lanthanoxid; spezifische Oberfläche 140 g/m²) durch Porenvolumenimprägnierung mit einer wässrigen Lösung aus Palladiumnitrat imprägniert. Hierzu wurde das pulverförmige Aluminiumoxid in einem Kessel umgewälzt und mit der Imprägnierlösung besprüht. Das Volumen der Imprägnierlösung entsprach 90% der Wasseraufnahmekapazität des vorgelegten Pulvers. Die Konzentration der Imprägnierlösung war so gewählt, daß das in ihr enthaltene Palladium 2,5 Gew.-% Palladium, bezogen auf das Gesamtgewicht aus Aluminiumoxid und Palladium entsprach. Nach der Imprägnierung wurde das Material getrocknet und bei 500 °C für die Dauer von 2 Stunden an Luft calciniert.

### Beispiel 1:

Es wurde eine zweite Pulvercharge des stabilisierten γ-Aluminiumoxid nach dem erfindungsgemäßen Verfahren mit Palladium belegt.

Zu diesem Zweck wurden Aluminiumoxid und Bariumhydroxid in Wasser suspendiert, wobei Bariumhydroxid in Lösung ging und den pH-Wert der Suspension in den basischen Bereich verschob. Danach wurde eine wässrige Lösung von Palladiumnitrat der Suspension unter ständigem Rühren mittels Kapillarinjektion zugeführt. Nach Beendigung der Zugabe von Palladiumnitrat wurde die Suspension noch für die Dauer von einer Stunde gerührt, um die Fixierung von Palladium und Barium in innigem Kontakt zueinander auf der Oberfläche des Aluminiumoxids zu ermöglichen. Nach Abtrennen des katalysierten Aluminiumoxids von der wässrigen Phase der Suspension wurde es wie in Vergleichsbeispiel 1 getrocknet und an Luft calciniert.

Bei beiden Katalysatorpulvern von Vergleichsbeispiel 1 und Beispiel 1 wurden die Partikelgrößenverteilungen der auf dem Aluminiumoxid abgeschiedenen Palladiumkristallite durch Auswertung von Aufnahmen mit einem Transmissionselektronenmikroskop bestimmt. Die Ergebnisse dieser Auswertungen sind in Tabelle 1 aufgeführt.

**Tabelle 1:**

| Größenverteilung der Palladiumkristallite auf Aluminiumoxid | | | |
|---|---|---|---|
| Vergleichsbeispiel 1 | | Beispiel 1 | |
| Partikelgröße [nm] | Größenverteilung [%] | Partikelgröße [nm] | Größenverteilung [%] |
| 6 | 7,7 | 4,1 | 2,9 |
| 8 | 7,7 | 4,4 | 8,6 |
| 10 | 13,0 | 4,7 | 14,3 |
| 12 | 17,0 | 5,0 | 22,9 |
| 14 | 26,9 | 5,3 | 31,4 |
| 16 | 16,0 | 5,6 | 17,1 |
| 18 | 7,7 | 5,9 | 2,9 |
| 20 | 3,8 | | |

Wie diese Untersuchungen zeigen, führt das konventionelle Imprägnierverfahren zu einer sehr breiten Größenverteilung mit einer mittleren Partikelgröße von 13 nm mit einer Breite von ± 5,5 nm. Dagegen liefert die erfindungsgemäße Präparation des Katalysatorpulvers gemäß Beispiel 1 eine sehr schmale Größenverteilung mit einer mittleren Partikelgröße von nur 5 nm und einer Breite von ± 0,5 nm.

### Vergleichsbeispiel 2:

Mehrere Wabenkörper wurden mit dem in Vergleichsbeispiel 1 hergestellten Katalysatonnaterial beschichtet, indem das Material zuerst in Wasser suspendiert und anschließend durch Eintauchen der Wabenkörper in diese Suspension auf die Wände der Strömungskanäle der Wabenkörper aufgetragen wurde. Die Beschichtungskonzentration betrug 140 Gramm pro Liter Wabenkörper (g/l). Die Beschichtung wurde getrocknet und an Luft bei 500 °C für die Dauer von 2 Stunden calciniert. Die Konzentration von Palladium, bezogen auf den Katalysatorkörper, betrug somit 3,53 g/l (entsprechend 100 g/ft³). Diese Katalysatoren werden im folgenden mit VK1 bezeichnet.

### Beispiel 2:

Das erfindungsgemäße Katalysatormaterial von Beispiel 1 wurde wie in Vergleichsbeispiel 2 beschrieben auf mehrere Wabenkörper aufgetragen. Die totale Beschichtungskonzentration betrug 140 g/l, davon 10 g/l Bariumoxid und 3,53 g/l Palladium. Diese Katalysatoren werden im folgenden mit K1 bezeichnet.

### Beispiel 3:

Mehrere Katalysatoren von Beispiel 2 wurde mit einer zweiten Beschichtung gemäß der Tabelle 2 versehen. Diese Katalysatoren werden im folgenden mit K2 bezeichnet.

Zur Herstellung der zweiten Beschichtung wurde zunächst stabilisiertes Aluminiumoxid (3 Gew.-% La₂O₃, 97 Gew.-% Al₂O₃) in Wasser suspendiert. Danach wurde eine Lösung eines chlorfreien Platinsalzes ((EA)₂Pt(OH)₆) in die Suspension injiziert, welches schnell auf dem Aluminiumoxid adsorbiert wurde. Danach wurde eine Lösung von Rhodiumnitrat in die Suspension injiziert. Durch Anheben des pH-Wertes der Suspension wurden beide Edelmetall-Komponenten auf dem Aluminiumoxid fixiert. Abschließend wurden der Suspension unstabilisiertes γ-Aluminiumoxid, Praseodymacetat und ein Cer/Zirkon-Mischoxid (70 Gew.-% Ceroxid, 30 Gew.-% Zirkonoxid) zugefügt.

Vor der Beschichtung der Wabenkörper wurde der pH-Wert der Suspension auf einen Wert von 6 eingestellt. Danach wurde die Suspension in einer Mühle homogenisiert, so daß ihre oxidischen Bestandteile eine mittlere Komgröße von 2 bis 3 µm aufwiesen.

Die Wabenkörper wurden durch Eintauchen in diese Suspension mit einer zweiten Beschichtung versehen. Die Beschichtung wurde getrocknet und bei 500 °C in Luft calciniert. Die Zusammensetzung dieser zweiten Beschichtung ist in Tabelle 2 aufgelistet.

**Tabelle 2:**

| Zusammensetzung der zweiten Schicht der Katalysatoren K2 von Beispiel 3 | |
|---|---|
| Komponente | Konzentration [g/l] |
| γ-Aluminiumoxid (stabilisiert mit 3 Gew.-% La₂O₃) | 10 |
| CeO₂/ZrO₂ (70 Gew.-% CeO₂; 30 Gew.-% ZrO₂) | 18,5 |
| Pr₆O₁₁ | 1,5 |
| γ-Aluminiumoxid (unstabilisiert) | 40 |
| Gesamtoxidgehalt | **70** |
| Platin | 0,235 |
| Rhodium | 0,235 |
| Gesamtgehalt an Platin plus Rhodium | **0,47** |

### Katalytische Aktivität der Katalysatoren VK1 und K1:

Die katalytischen Eigenschaften der Katalysatoren wurden sowohl bei Belastung mit einem synthetischen Abgas als auch am Motor untersucht. Vor den Messungen im synthetischen Abgas wurden die Katalysatoren einer Alterung an Luft bei 1100 °C für die Dauer von 24 Stunden unterzogen.

Die Untersuchungen im synthetischen Abgas wurden an einer sogenannten Modellgasanlage vorgenommen. Das synthetische Abgas hatte die in Tabelle 3 angegebene Zusammensetzung.

Zur Ermittlung der Anspringtemperaturen der Katalysatoren VK1 und K1 wurden sie bei einer Raumgeschwindigkeit von 100.000 h⁻¹ mit dem synthetischen Abgas belastet, wobei die Temperatur des Abgases mit einer Rate von 20 °C/min von 75 auf 500 °C angehoben wurde. Die Anspringtemperaturen für die drei Schadstoffe Kohlenmonoxid CO, Kohlenwasserstoffe HC und Stickoxid NOx wurden bei einem Umsatz des jeweiligen Schadstoffes von 70% ermittelt (T_{70%}).

Die Messungen wurden bei zwei verschiedenen Luftzahlen Lambda (λ = 0,993 und λ = 1,15) vorgenommen. Die Luftzahl Lambda ist das auf stöchiometrische Bedingungen normierte Luft/Kraftstoff-Verhältnis und wird deshalb auch häufig als normiertes Luft/Kraftstoff-Verhältnis bezeichnet. Die Luftzahl des Abgases wurde durch Variation des CO-Gehaltes an die Erfordernisse der jeweiligen Messungen angepaßt. Die Messungen bei λ = 0,993 erfolgten dynamisch, das heißt die Luftzahl wurde mit 1 Hz und einer Amplitude von ± 0,87 A/F (A/F = air/fuel) moduliert. Bei λ = 1,15 erfolgte keine Modulation. Die Ergebnisse dieser Messungen sind in Tabelle 4 aufgelistet.

**Tabelle 3:**

| Zusammensetzung des Modell-Abgases | | | |
|---|---|---|---|
| Gaskomponente | Konzentration | Gaskomponente | Konzentration |
| CO | 1,4 Vol.-% | NOx (NO) | 0,1 Vol.-% |
| H₂ | 0,47 Vol.-% | CO₂ | 14 Vol.-% |
| O₂ | 1,2 Vol.-% | SO₂ | 20 Vol.-ppm |
| Propen | 666 Vol.-ppm | H₂O | 10 Vol.-% |
| Propan | 333 Vol.-ppm | N₂ | Rest |

**Tabelle 4:**

| Anspringtemperaturen T_{70%} der Katalysatoren VK1 und K1 bei einer Raumgeschwindigkeit von 100.000 h⁻¹ für ein Modellgas | | | | | |
|---|---|---|---|---|---|
| | λ = 0,993; ± 0,87 A/F bei 1 Hz | | | λ = 1,15; statisch | |
| Katalysator | CO[°C] | HC[°C] | NOx[°C] | CO[°C] | HC[°C] |
| VK1 | 288 | 293 | 315 | 252 | 273 |
| K1 | 275 | 282 | 285 | 245 | 266 |

In Tabelle 5 sind die bei diesen Messungen ermittelten Schadstoffumsetzungen bei einer Abgastemperatur von 400 °C bei λ = 0,993 im dynamischen Betrieb angegeben.

**Tabelle 5:**

| Dynamische Schadstoffumsetzung der Katalysatoren VK1 und K1 für das Modellabgas bei einer Abgastemperatur von 400 °C | | | |
|---|---|---|---|
| | λ=0,993; ± 0,87 A/F bei 1 Hz | | |
| Katalysator | CO[%] | HC[%] | NOx[%] |
| VK1 | 63 | 82 | 61 |
| K1 | 61 | 86 | 67 |

Zwei weitere Exemplare der Katalysatoren VK1 und K1 wurden einer Alterung an einem Motor (Hubraum 2,8 1) für die Dauer von 50 Stunden bei einer Abgastemperatur von 870 °C vor den Katalysatoren und periodischer Schubabschaltung unterworfen. Danach wurden die Anspringtemperaturen im Motorabgas für 50% Umsatz im fetten Abgas bei λ = 0,999 unter dynamischen Bedingungen (Luftzahlmodulation: ± 0,5 A/F bei 1 Hz) und im mageren Abgas bei λ = 1,15 unter statischen Bedingungen ermittelt. Die Temperatur des Motorabgases wurde mit Hilfe eines Wärmetauschers mit einer Rate von 38 °C/min von 75 °C auf 500 °C erhöht. Die Ergebnisse sind in Tabelle 6 wiedergegeben.

**Tabelle 6:**

| Anspringtemperaturen T_{50%} der Katalysatoren VK1 und K1 bei einer Raumgeschwindigkeit von 65.000 h⁻¹; Messungen mit einem Motorabgas | | | | | |
|---|---|---|---|---|---|
| | λ = 0,999; ± 0,5 A/F bei 1 Hz | | | λ = 1,15; statisch | |
| Katalysator | CO[°C] | HC[°C] | NOx[°C] | CO [°C] | HC[°C] |
| VK1 | 453 | 448 | 450 | 241 | 249 |
| K1 | 432 | 420 | 442 | 244 | 243 |

Die obigen Messungen zeigen, daß der erfindungsgemäße Katalysator niedrigere Anspringtemperaturen sowohl im Modellabgas als auch im Motorabgas aufweist.

### Ermittlung des Kreuzungspunktes der CO/NOx-Umsatzkurven:

Wird die Luftzahl des Abgases kontinuierlich von fett (λ<1) nach mager (λ>1) verändert, so ist zunächst im fetten Bereich die Umsetzung von CO sehr gering, während die Umsetzung von NOx maximal ist. Mit steigender Luftzahl nimmt die Umsetzung von CO zu, während die Umsetzung von NOx abnimmt. Bei magerer Abgaszusammensetzung ist dann die Umsetzung von NOx gering, während die Umsetzung von CO ihrem Maximalwert zustrebt. Bei einer mittleren Luftzahl kreuzen sich beide Umsatzkurven. Der Kreuzungspunkt beider Umsatzkurven (CO/NOx crossover-point) gibt somit den maximalen Umsatz an, der gleichzeitig für CO und NOx erreicht werden kann.

Vor den Messungen wurden zwei frische Katalysatoren VK1 und K1 einer Alterung an einem Motor (Hubraum 2,8 1) für die Dauer von 50 Stunden bei einer Abgastemperatur von 870 °C vor den Katalysatoren und periodischer Schubabschaltung unterworfen. Zur Bestimmung der Kreuzungspunkte der CO und NOx Umsatzkurven wurde die Luftzahl des Motorabgases periodisch zwischen den Werten 0,98 und 1,02 hin und her variiert. Der Übergang von einer Luftzahl zur anderen wurde dabei innerhalb von etwa 3 Minuten vorgenommen. Dieser langsamen Änderung der Luftzahl wurde eine Luftzahlmodulation mit 1 Hz überlagert.

Tabelle 7 zeigt die Ergebnisse der Messungen für die Katalysatoren VK1 und K1 bei Abgastemperaturen von 400 und 450 °C sowie zwei unterschiedlichen Modulationsgraden der Luftzahl.

**Tabelle 7:**

| Dynamischer CO/NOx Crossover-Umsatz der Katalysatoren VK1 und K1. | | |
|---|---|---|
| Katalysator | ±0,5 A/F; 1 Hz; 400°C Umsatz [%] | ±1,0 A/F; 1 Hz; 450°C Umsatz [%] |
| VK1 | 62 | 55 |
| K1 | 70 | 61 |

## Patentansprüche

1. Abgasreinigungskatalysator für motomahen Einsatz für die Reinigung der Abgase von Otto-Motoren bestehend aus Palladium auf Aluminiumoxid sowie Bariumoxid,
**dadurch gekennzeichnet,**
**daß** Bariumoxid und Palladium gemeinsam auf dem Trägermaterial Aluminiumoxid abgeschieden sind und die mittlere Partikelgröße der auf dem Trägermaterial vorliegenden Palladiumkristallite zwischen 3 und 7 nm liegt, wobei das Aluminiumoxid mit 1 bis 10 gew.-% Lanthanoxid stabilisiert ist.

2. Abgasreinigungskatalysator nach Anspruch 1,
**dadurch gekennzeichnet,**
**daß** er in Form einer ersten katalytisch aktiven Beschichtung auf einen inerten, monolithischen Wabenkörper aus Keramik oder Metall in einer Konzentration zwischen 50 und 200 Gramm pro Liter Volumen des Wabenkörpers aufgebracht ist.

3. Abgasreinigungskatalysator nach Anspruch 2,
**dadurch gekennzeichnet,**
**daß** er 1 bis 10 g/l Palladium, 45 bis 180 g/l Aluminiumoxid und 5 bis 20 g/l Bariumoxid enthält.

4. Abgasreinigungskatalysator nach Anspruch 2 oder 3,
**dadurch gekennzeichnet,**
**daß** auf die erste katalytisch aktive Beschichtung eine zweite katalytisch aktive Beschichtung aufgebracht wird, welche Platin und Rhodium auf Aluminiumoxid sowie eine Sauerstoff speichernde Komponente und weiteres Aluminiumoxid enthält.

5. Abgasreinigungskatalysator nach Anspruch 4,
**dadurch gekennzeichnet,**
**daß** das als Trägermaterial für Platin und Rhodium dienende Aluminiumoxid mit Lanthanoxid stabilisiert ist.

6. Abgasreinigungskatalysator nach Anspruch 5,
**dadurch gekennzeichnet,**
**daß** die zweite Schicht in einer Konzentration von 30 bis 100 g/l Volumen des Wabenkörpers vorliegt.

7. Verfahren zur Herstellung eines Abgasreinigungskatalysator nach Anspruch 2 oder 3,
**dadurch gekennzeichnet,**
**daß** man Aluminiumoxid und Bariumhydroxid in Wasser suspendiert, wobei Bariumhydroxid in Lösung geht und den pH-Wert der Suspension in den basischen Bereich verschiebt, eine wässrige Lösung einer Vorstufe von Palladium der Suspension unter ständigem Rühren mittels Kapillarinjektion zuführt und mit der resultierenden Suspension den Wabenkörper beschichtet, trocknet und calciniert.

8. Verwendung des Abgasreinigungskatalysator nach einem der Ansprüche 2, 3 oder 4 in Kombination mit einem Hauptkatalysator für die Reinigung der Abgase eines mit einem Otto-Motor angetriebenen Kraftfahrzeugs, wobei der Abgasreinigungskatalysator in motomaher Position und der Hauptkatalysator im Unterbodenbereich des Kraftfahrzeugs angeordnet ist.

9. Verwendung des Abgasreinigungskatalysator nach einem der Ansprüche 4 bis 6 als alleiniger, in motornaher Position angeordneter, Abgasreinigungskatalysator für ein mit einem Otto-Motor angetriebenes Kraftfahrzeug.

## Claims

1. An exhaust-gas purification catalyst to be used close to the engine, for the purification of the exhaust gases from Otto engines, consisting of palladium on aluminium oxide and of barium oxide,
**characterised in that**
barium oxide and palladium are together deposited on the supporting material aluminium oxide and the average particle size of the palladium crystallites present on the support is between 3 nm and 7 nm, wherein the aluminium oxide is stabilized with 1 to 10 wt-% lanthanum oxide.

2. The exhaust-gas purification catalyst according to claim 1,
**characterised in that**
it is applied in the form of a first catalytically active coating to an inert, monolithic honeycomb structure made of ceramic or metal, in a concentration of between 50 and 200 grams per litre volume of the honeycomb structure.

3. The exhaust-gas purification catalyst according to claim 2,
**characterised in that**
it contains 1 to 10 g/l palladium, 45 to 180 g/l aluminium oxide and 5 to 20 g/l barium oxide.

4. The exhaust-gas purification catalyst according to claim 2 or 3,
**characterised in that**
a second catalytically active coating containing platinum and rhodium on aluminium oxide as well as an oxygen-storing component and additional aluminium oxide is applied to the first catalytically active coating.

5. The exhaust-gas purification catalyst according to claim 4,
**characterised in that**
the aluminium oxide serving as a support for platinum and rhodium is stabilised with lanthanum oxide.

6. The exhaust-gas purification catalyst according to claim 5,
**characterised in that**
the second layer has a concentration of 30 to 100 g/l volume of the honeycomb structure.

7. A method for manufacturing a exhaust-gas purification catalyst to claim 2 or 3,
**characterised in that**
aluminium oxide and barium hydroxide are suspended in water, during which barium hydroxide passes into solution and shifts the pH value of the suspension into the basic range, an aqueous solution of a precursor of palladium is introduced into the suspension by means of capillary injection, with constant stirring, and the honeycomb structure is coated with the resulting suspension, dried and calcined.

8. A use of the exhaust-gas purification catalyst according to any one of claims 2, 3 or 4 in combination with a main catalyst for the purification of the exhaust gases of a motor vehicle powered by an Otto engine, wherein the exhaust-gas purification catalyst is disposed in a position close to the engine and the main catalyst is disposed in the underbody region of the motor vehicle.

9. The use of the exhaust-gas purification catalyst according to any one of claims 4 to 6 as the sole exhaust-gas purification catalyst, disposed in a position close to the engine, for a motor vehicle powered by an Otto engine.

## Revendications

1. Catalyseur de purification de gaz d'échappement pour l'utilisation à proximité d'un moteur pour la purification des gaz d'échappement d'un moteur à combustion interne, constitué de palladium sur de l'oxyde d'aluminium ainsi que d'oxyde de baryum, **caractérisé en ce que** l'oxyde de baryum et de palladium sont déposés ensemble sur le matériau support oxyde d'aluminium et que la grosseur moyenne des particules des cristallites de palladium se trouvant sur le matériau support est comprise entre 3 et 7 nm, l'oxyde d'aluminium étant stabilisé par 1 à 10% en poids d'oxyde de lanthane.

2. Catalyseur de purification de gaz d'échappement selon la revendication 1, **caractérisé en ce qu'**il est appliqué sous forme d'un premier revêtement catalytiquement actif sur un corps en nid d'abeille inerte monolithique en céramique ou en métal en une concentration entre 50 et 200 grammes par litre de volume du corps en nid d'abeille.

3. Catalyseur de purification de gaz d'échappement selon la revendication 2, **caractérisé en ce qu'**il contient 1 à 10 g/l de palladium, 45 à 180 g/l d'oxyde d'aluminium et 5 à 20 g/l d'oxyde de baryum.

4. Catalyseur de purification de gaz d'échappement selon la revendication 2 ou 3, **caractérisé en ce qu'**on applique sur le premier revêtement catalytiquement actif un deuxième revêtement catalytiquement actif qui contient du platine et du rhodium sur de l'oxyde d'aluminium ainsi qu'un composant accumulant l'oxygène et de l'oxyde d'aluminium supplémentaire.

5. Catalyseur de purification de gaz d'échappement selon la revendication 4, **caractérisé en ce que** l'oxyde d'aluminium servant de matériau support pour le platine et le rhodium est stabilisé avec de l'oxyde de lanthane.

6. Catalyseur de purification de gaz d'échappement selon la revendication 5, **caractérisé en ce que** la deuxième couche se trouve en une concentration de 30 à 100 g/l de volume du corps en nid d'abeille.

7. Procédé pour la préparation d'un catalyseur de purification de gaz d'échappement selon la revendication 2 ou 3, **caractérisé en ce qu'**on met en suspension de l'oxyde d'aluminium et de l'hydroxyde de baryum dans de l'eau, l'hydroxyde de baryum passant en solution et le pH de la suspension se déplaçant vers la plage basique, on introduit une solution aqueuse d'un précurseur du palladium dans la suspension, sous agitation constante au moyen d'une injection capillaire et on recouvre le corps en nid d'abeille avec la suspension obtenue, on sèche et on calcine.

8. Utilisation d'un catalyseur de purification de gaz d'échappement selon l'une quelconque des revendications 2, 3 ou 4 en combinaison avec un catalyseur principal pour la purification des gaz d'échappement d'un véhicule entraîné par un moteur à combustion interne, le catalyseur de purification de gaz d'échappement étant disposé à proximité du moteur et le catalyseur principal au niveau du soubassement du véhicule.

9. Utilisation d'un catalyseur de purification de gaz d'échappement selon l'une quelconque des revendications 4 à 6 comme catalyseur unique de purification de gaz d'échappement, disposé à proximité du moteur pour un véhicule entraîné par un moteur à combustion interne.
